(19) Europäisches Patentamt
European Patent Office
Office européen des brevets

(11) **EP 3 982 175 B1**

(12) **EUROPEAN PATENT SPECIFICATION**

(45) Date of publication and mention
of the grant of the patent:
**24.09.2025 Bulletin 2025/39**

(21) Application number: **19931680.3**

(22) Date of filing: **19.07.2019**

(51) International Patent Classification (IPC):
***G02B 6/02*** (2006.01)     ***G02B 6/036*** (2006.01)

(52) Cooperative Patent Classification (CPC):
**G02B 6/02042; G01L 1/246; G02B 6/0365;
G02B 6/03661**

(86) International application number:
**PCT/CN2019/096641**

(87) International publication number:
**WO 2020/244034 (10.12.2020 Gazette 2020/50)**

(54) **MULTI-CORE FEW-MODE OPTICAL FIBER AND MANUFACTURING METHOD THEREFOR**

MEHRKERNIGE FEW-MODE-GLASFASERN UND HERSTELLUNGSVERFAHREN DAFÜR

FIBRE OPTIQUE PEU MODALE MULTICOEUR ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2019 CN 201910482739**

(43) Date of publication of application:
**13.04.2022 Bulletin 2022/15**

(73) Proprietors:
• **Fiberhome Telecommunication Technologies
Co., Ltd**
**Wuhan, Hubei 430000 (CN)**
• **Ruiguang Telecommunication Technologies Co.,
Ltd.**
**Wuhan, Hubei 430000 (CN)**

(72) Inventors:
• **DU, Cheng**
**Wuhan, Hubei 430000 (CN)**
• **LUO, Wenyong**
**Wuhan, Hubei 430000 (CN)**
• **LI, Wei**
**Wuhan, Hubei 430000 (CN)**
• **CHEN, Baoping**
**Wuhan, Hubei 430000 (CN)**
• **HE, Maoyou**
**Wuhan, Hubei 430000 (CN)**
• **HU, Guohua**
**Wuhan, Hubei 430000 (CN)**
• **QIAN, Feng**
**Wuhan, Hubei 430000 (CN)**

(74) Representative: **Kuhnen & Wacker
Patent- und Rechtsanwaltsbüro PartG mbB
Prinz-Ludwig-Straße 40A
85354 Freising (DE)**

(56) References cited:
CN-A- 103 630 965     CN-A- 105 425 335
CN-A- 106 461 859     CN-A- 108 292 009
CN-U- 208 367 258     US-A1- 2013 039 627
US-A1- 2017 160 466     US-A1- 2018 356 590
US-A1- 2019 033 513     US-B2- 9 081 129

• **SASAKI YUSUKE ET AL: "Few-Mode Multicore
Fiber With 36 Spatial Modes (Three Modes (LP01,
LP11a, LP11b) x 12 Cores)", JOURNAL OF
LIGHTWAVE TECHNOLOGY, IEEE, USA, vol. 33,
no. 5, 1 March 2015 (2015-03-01), pages 964 - 970,
XP011575197, ISSN: 0733-8724, [retrieved on
20150309], DOI: 10.1109/JLT.2014.2375876**

**Description**

**Field of the Invention**

The invention relates to the field of optical fiber sensing and optical fiber communication, in particular to a multi-core few-mode optical fiber and a manufacturing method therefor.

**Background of the Invention**

In the future aircraft, morphing aircraft with flexible deformable wings is an important development direction, and the intelligent composite material structure integrating drive control and sensor monitoring has become the first choice for new flexible skins of aircraft. For the deformation monitoring of high-end morphing wings, the two-dimensional deformation data can no longer meet the requirements of future aircraft, so it is extremely important to obtain the three-dimensional deformation data of the wings in real time. Therefore, it is urgent to research and develop a new generation of monitoring technology for dynamically monitoring the three-dimensional space deformation of the deformed wings of future aircraft, thereby providing accurate deformation data, further providing an important guarantee for the safe flight of the aircraft.

A fiber Bragg grating (FBG) sensor, a mature distributed structure health long-term monitoring technology, has high environmental adaptability and long-term reliability, and has the advantages of micron size, soft and light weight, and easy implantation. One of the current research hotspots of flexible skin composite materials is to embed the grating-engraved optical fiber into the composite materials so as to form a smart skin structure, thereby realizing long-term damage monitoring of the wing skin. However, traditional optical fiber sensors are all based on conventional single-core communication optical fibers, which have the characteristics of being sensitive to axial direction deformation and insensitive to lateral deformation, therefore, special arrangements are required to meet the requirements of bending sensing.

Multi-core optical fiber has a plurality of high-refractive-index fiber cores, so the multi-core grating formed by writing grating on the multi-core optical fiber can effectively combine the bending sensing characteristics of the multi-core optical fiber with the strain sensitive characteristics of the grating and the advantages of the distributed measurement. Currently, sensing fiber grating arrays without solder joints are widely used to monitor the deformation of the aircraft skins. In the process of fiber grating manufacturing and application, it is especially important to effectively distinguish each core region of the optical fiber main body of the multi-core structure. However, because the manufacturing process of the multi-core optical fibers with different core structures is relatively difficult, the currently used multi-core optical fiber cores are usually a combination of a plurality of identical simple step-type waveguides, and the transmission signals thereof are similar and difficult to distinguish, besides, this type of the multi-core optical fiber with a similar waveguide structure in each core is also not conducive to subsequent fiber grating writing effect inspection and data analysis in monitoring applications.

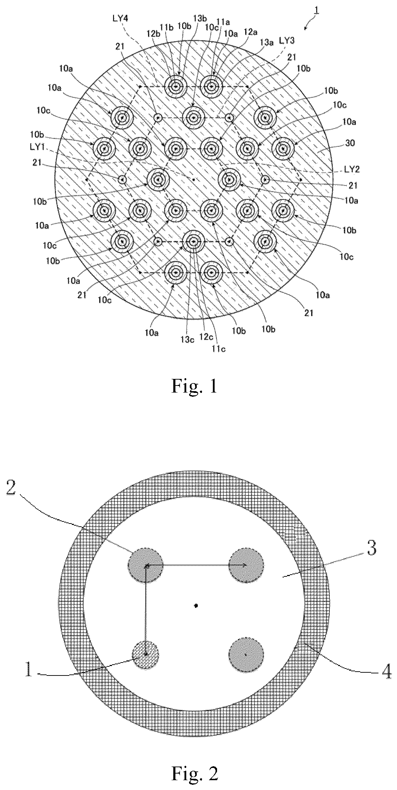

As the multi-core optical fiber shown in Fig. 1, the multi-core optical fiber 1 comprises a plurality of fiber core units 10a, 10b, 10c and a plurality of second fiber cores 21, wherein the fiber core unit 10a successively comprises a first fiber core 11a, an inner cladding layer 12a, and a low refractive index layer 13a; the fiber core unit 10b successively comprises a first fiber core 11b, an inner cladding layer 12b, and a low refractive index layer 13b; the fiber core unit 10c successively comprises a first fiber core 11c, an inner cladding layer 12c, and a low refractive index layer 13c. The outer peripheral surfaces of the low refractive index layers 13a, 13b, and 13c are all surrounded by an outer cladding layer 30, the multi-core optical fiber 1 is provided with four layers of LY1, LY2, LY3, and LY4, a plurality of fiber cores on each layer are regularly distributed in a hexagonal shape, and the effective refractive indexes of the fiber core units 10a, 10b, and 10c are different from that of the second fiber core 21. The multi-core optical fiber 1 solves the problem of suppressing crosstalk during signal transmission through satisfying a specific arrangement rule and changing the refractive index. However, there still exists some problems. First of all, this type of optical fiber has a complicated manufacturing process and has high requirements for arrangement and accuracy; secondly, the number of fiber cores is relatively large and symmetrically distributed, which can only be applied in the communication field, not in the sensor, so the application range is limited.

Yusuke Sasaki et al. discloses a few-mode multicore fiber with 36 spatial modes. This fiber has low intercore crosstalk (IC-XT) and low differential mode group delay (DMD). In order to produce such a fiber, three new techniques are introduced to few-mode multicore fiber. A heterogeneous core arrangement with two types of cores, is used to minimize IC-XT; a multistep index, which can control DMD without sacrificing intermode crosstalk, is adopted as a core profile to reduce DMD; and a square lattice structure allows for the inclusion of 12 cores within a cladding diameter of 230 $\mu$m. Optimum design of the fiber using these techniques is determined from calculations. Finally, detailed characteristics of a three-mode 12-core fiber based on the design are reported. A fabricated 40-km fiber is confirmed to have a DMD of less than |530| ps/km over the C+L band and an estimated worst-case IC-XT of less than -55 dB/100 km at 1550 nm. This low IC-XT allows for the transmission of 32 QAM signals.

US2017/0160466A1 discloses a multicore fiber, which includes a plurality of unit multicore fibers each including: a plurality of core portions; and a clad portion which is formed in an outer circumference of the core portions and has a refractive index lower than a maximum refractive index of the core portions. The plurality of the core portions have substantially same refractive index profile and different group delays at same wavelength in same propagation mode. The core portions of the multicore fiber are configured so that the core portions of the plurality of the unit multicore fibers are connected in cascade, a maximum value of differential group delays between the core portions of the multicore fiber is smaller than a reduced value of a maximum value of differential group delays between the core portions of each unit multicore fiber as a value in terms of a length of the multicore fiber.

US2019/0033513A1 discloses a multicore fiber, which includes: a first core having a first propagation loss of a first light beam in a mode one order higher than a mode of a second light beam that transmits information. The first propagation loss is 0.02 dB/m or more and 1dB/m or less, in a wavelength band of light beams including the second light beam that transmit the information when a bend having a diameter of 280 mm is applied to the multicore fiber.

US2018/0356590A1 discloses a multicore fiber, which includes a plurality of cores including a first core and a cladding surrounding the plurality of cores. The first core includes: an inner core; and an outer core surrounding the inner core with no gap and having a refractive index higher than a refractive index of the inner core and a refractive index of the cladding. The core is not doped with any rare earth element. At least two LP mode light beams at a predetermined wavelength propagate through the first core at an attenuation of 0.3 dB/km or less.

## Summary of the Invention

In view of the defects existing in the prior art, the object of the present invention is to provide a multi-core few-mode optical fiber and a manufacturing method therefor, which solves the problem that the transmission signals in the signal transmission process are similar and difficult to distinguish when the optical fiber is applied in the field of sensing and communication.

In order to achieve the above object, the present invention adopts the technical solution as defined in claim 1.

On the basis of the above technical solution, the refractive index of the third core layer is greater than or equal to that of the cladding layer, and the refractive indexes of the fourth core layer, the cladding layer and the third core layer are approximately step distributions.

On the basis of the above technical solution, the first fiber core and the second fiber core each comprise a plurality of circulating layers arranged in order, and the fourth core layer is arranged outside the outermost circulating layer.

On the basis of the above technical solution, the predetermined distance is 32~248 $\mu$m.

On the basis of the above technical solution, the number of the first fiber core is three at most.

On the basis of the above technical solution, the fiber body further comprises a coating layer, and the coating layer is arranged outside the cladding layer.

On the basis of the above technical solution, a thickness of the coating layer is 20~100 $\mu$m, and a radius of the cladding layer is 30~500 $\mu$m.

On the basis of the above technical solution, the material of the coating layer is one of double-layer acrylic resin, polyimide, single-layer acrylic resin or silicone rubber.

On the other hand, the object of the present invention is to provide a method for manufacturing a multi-core few-mode optical fiber, which solves the problem that the transmission signals in the signal transmission process are similar and difficult to distinguish when the optical fiber is applied in the field of sensing and communication.

In order to achieve the above object, the present invention adopts the technical solution defined in claim 9.

On the basis of the above technical solution, the four core layers comprise a first core layer, a second core layer, a third core layer and a fourth core layer arranged from the inside to the outside, wherein

during the process of depositing the fourth core layer, controlling the flow ratio of $SiCl_4$ to 50%~85%, $GeCl_4$ to 10%~20%, $BCl_3$ to 10%~30%, $C_2F_6$ to 0%~10%, $O_2$ to 30%~70%, and the number of depositions to 600~4800;

during the process of depositing the third core layer, controlling the flow ratio of $SiCl_4$ to 30%~70%, $GeCl_4$ to 0%~20%, $C_2F_6$ to 10%~40%, $O_2$ to 30%~70%, and the number of depositions to 200~1200;

during the process of depositing the second core layer, controlling the flow ratio of $SiCl_4$ to 30%~70%, $GeCl_4$ to 20%~75%, $C_2F_6$ to 0%~25%, $O_2$ to 30%~70%, and the number of depositions to 300~1200;

during the process of depositing the first core layer, controlling the flow ratio of $SiCl_4$ to 50%~85%, $GeCl_4$ to 10%~20%, $BCl_3$ to 10%~30%, $C_2F_6$ to 0%~10%, $O_2$ to 30%~70%, and the number of depositions to 200~6000.

On the basis of the technical solution, the predetermined positions respectively correspond to the positions of the first fiber core and the second fiber core which are at a predetermined distance from the center of the fiber body.

On the basis of the above technical solution, the core layer is deposited by means of a plasma chemical vapor deposition method.

Compared with the prior art, the present invention has the following advantages:

(1) The multi-core few-mode optical fiber provided by the present invention comprises two kinds of annular fiber core structures with graded refractive index. Each fiber core comprises four core layers with different refractive indexes or diameters, can support a plurality of linear polarization modes, and meet the needs of shape sensing. While satisfying optical grating array writing, the distinction between different linear polarization modes ensures simple identification of transmission signals from different fiber cores and reduces the difficulty of demodulating the three-dimensional shape sensing signal, and improves the lateral deformation sensitivity of the FBG sensor based on multi-core optical fiber on the basis of satisfying the application in the communication field. In addition, the special multi-gradient waveguide structure that is conducive to the transmission of low-order mode signals can reduce the leakage and crosstalk of optical signals in the case of micro bending and overall shape bending caused by compressive stress in the shape sensing application of the multi-core optical fiber. The few-mode optical fiber with multi-core structure has good optical performance and reliability, and has excellent multi-mode transmission performance, which meets the needs of shape sensing applications.

(2) The multi-core few-mode optical fiber provided by the present invention, made by plasma chemical vapor deposition (PCVD) process, directly realizes the annular fiber core waveguide structure matching the design. Each fiber core can be set arbitrarily on the basis of meeting the predetermined center distance. The requirement for the distribution accuracy of the fiber cores in the few-mode optical fiber with multi-core structure is relatively low, which can easily meet the requirements for parallel comparison of multi-dimensional channels for multi-directional shape sensing, and effectively solve the problem of realizing the annular fiber core structure by doping at specific positions in a plurality of fiber cores.

**Description of the Drawings**

Fig. 1 is a structural schematic diagram of a multi-core optical fiber in the prior art;

Fig. 2 is a structural schematic diagram of a multi-core few-mode optical fiber in the embodiment of the present invention;

Fig. 3 is a structural schematic diagram of a first fiber core of a multi-core few-mode optical fiber in the embodiment of the present invention;

Fig. 4 is a schematic diagram of a longitudinal section of a first fiber core of a multi-core few-mode optical fiber in the embodiment of the present invention.

In the figures: 1-the first fiber core, 11-the first core layer, 12-the second core layer, 13-the third core layer, 14-the fourth core layer, 2-the second fiber core, 3-cladding layer, and 4-coating layer.

**Detailed Description of the Embodiments**

The present invention will be further described below in detail with reference to the drawings in combination with the embodiments.

In order to facilitate understanding, the technical terms involved in the present invention such as relative refractive index difference are first explained, which are defined as follows:

$$\Delta\% = \left[\frac{n_i^2 - n_0^2}{2 \times n_i^2}\right] \times 100\% \approx \frac{n_i - n_0}{n_0} \times 100\%$$

wherein $n_i$ and $n_0$ are the refractive index of each core layer and cladding layer 3 at a wavelength of 1550 nm respectively, i = 1, 2, 3, 4, and the value of i corresponds to the first core layer 11, the second core layer 12, the third core layer 13 and the fourth core layer 14 respectively.

$$\mathrm{n}^2(r) = n_1{}^2[1 - 2 \times \Delta \times A \times (\frac{r}{a})^{\alpha}]$$

wherein n(r) is the power-law refractive index distribution function, $n_1$ is the refractive index at the axis of the multi-core few-mode optical fiber, r is the distance from the outer side surface of each core layer to the axis of the multi-core few-mode optical fiber, a is the radius of the whole multi-core few-mode optical fiber, $\alpha$ is the distribution power exponent, and $\Delta$ is the relative refractive index difference, wherein a>r, and A<0.

As shown in Fig. 2, the embodiment of the present invention provides a multi-core few-mode optical fiber, comprising a fiber body and a cladding layer 3. Specifically, the fiber body comprises at least one first fiber core 1 and at least two second fiber cores 2 which are at a predetermined distance away from the center of the fiber body and spaced with each other. The first fiber core 1 and the second fiber core 2 are spaced with each other, and each two second fiber cores are spaced with each other. The first fiber core 1 and the second fiber core 2 each comprises at least one circulating layer, the circulating layer comprises three core layers, and a core layer is further arranged outside the circulating layer. The refractive indexes or diameters of any two adjacent core layers of the first fiber core 1 and the second fiber core 2 are different, wherein at least one of the effective refractive index and the diameter of the first fiber core 1 is different from that of the second fiber core 2 so that the first fiber core 1 and the second fiber core 2 are different in the mode length during the transmission of optical signals so as to ensure simple identification of the transmission signals for different fiber cores and meet the requirements of use. The first fiber core 1 and the second fiber core 2 herein can support a plurality of linear polarization modes and orbital angular momentum mode transmission. The cladding layer 3 has a certain thickness and surrounds the first fiber core 1 and the second fiber core 2, so that the first fiber core 1 and the second fiber core 2 are embedded in the cladding layer 3. The refractive index of the cladding layer 3 herein is lower than that of the first fiber core 1 and the second fiber core 2, and is higher than that of the outermost core layer of the first fiber core 1 and the second fiber core 2.

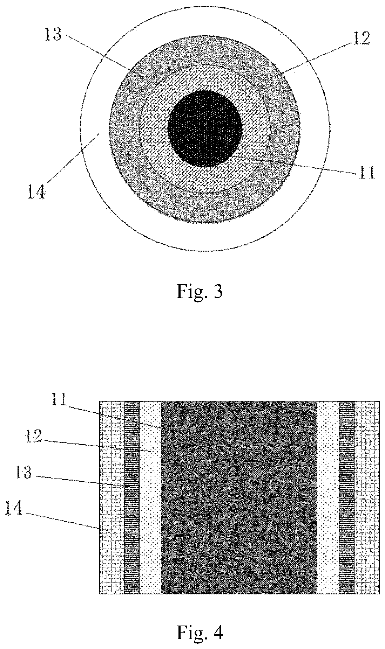

As shown in Fig. 3, the circulating layer comprises a first core layer 11, a second core layer 12 and a third core layer 13 arranged in order from the inside to the outside, and the core layer located outside the circulating layer is a fourth core layer 14. Specifically, the first core layer 11 is located in the exact center of the fiber core and has a cylindrical shape. The second core layer 12, the third core layer 13 and the fourth core layer 14 are successively arranged from the inside to the outside along the outer side surface of the first core layer 11 to form an entire fiber core. Among them, the maximum relative refractive index difference between the first core layer 11 and the third core layer 13 is 0.3% ~ 1.8%, and the minimum relative refractive index difference is 0.05% ~ 0.6%. The relative refractive index difference between the third core layer 13 and the second core layer 12 is 0.2% ~ 1.2%. The relative refractive index difference between the third core layer 13 and the fourth core layer 14 is greater than 0% and less than or equal to 1.1%.

As shown in Figs. 2 to 3, the refractive index of the third core layer 13 is greater than or equal to that of the cladding layer 3, and the refractive indexes of the fourth core layer 14, the cladding layer 3 and the third core layer 13 are approximately step distributions. The distribution power exponent of the refractive index of the first core layer 11 is -1.2 ~ -2.5.

The difference in effective refractive index or diameter of the first fiber core 1 and the second fiber core 2 will affect the mode length of the transmitted light, while different mode lengths can solve the problem of signal identification during transmitting signals by different fiber cores, therefore, at least one of the effective refractive index or the diameter of the first fiber core 1 and the second fiber care 2 is different from each other. The effective refractive index of the first fiber core 1 and the second fiber core 2 is affected by the refractive index of any core layer or the thickness of the core layer, wherein the thickness of the core layer herein refers to the difference between the inner and outer radius of the core layer having the annular shape, therefore, it is sufficient to only adjust the refractive index or the thickness of each core layer. The refractive index and the thickness of each core layer of the first fiber core 1 and the second fiber core 2 herein have the same value range, but the specific values are different. If at least one of the effective refractive index or the diameter of the first fiber core 1 and the second fiber core 2 is ensured to be different from each other, the signal can be effectively identified when the signal is transmitted.

As shown in Fig. 2, the fiber body further comprises a coating layer 4, which is arranged outside the cladding layer 3 and the material of the coating layer 4 can be one of double-layer acrylic resin, polyimide, single-layer acrylic resin or silicone rubber. The radius of the cladding layer 3 of the multi-core few-mode optical fiber is 30~500 $\mu$m, and the thickness of the coating layer 4 is 20~100 $\mu$m. The thickness herein refers to the distance between the inner and outer surfaces of the coating layer 4. The multi-core few-mode optical fiber has two different fiber cores. The fiber cores are separated by a certain distance and can be set arbitrarily based on the predetermined distance from the fiber body. At least one of the effective refractive index or the diameter between the two different fiber cores is different, so that the multi-core few-mode fiber can support five linear polarization modes of $LP_{01}$, $LP_{02}$, $LP_{11}$, $LP_{21}$, and $LP_{31}$, and for other modes except linear polarization modes of $LP_{01}$, $LP_{02}$, $LP_{11}$, $LP_{21}$ and $LP_{31}$ and $OAM_0$, $OAM_{\pm1}$, $OAM_{\pm2}$, the loss per meter is greater than 20dB. The exponential function distribution fiber core of the multi-core few-mode fiber with a scale factor of less than zero effectively increases the mode-mode coupling and reduces the difficulty of MIMO calculation in long-distance transmission, making the transmission loss of the support mode less than 0.20dB/km at a wavelength of 1550nm. In addition, the cutoff wavelength of the multi-core few-mode optical fiber in other linear polarization modes such as $LP_{41}$ is less than 1500nm, and the performance parameters of the multi-core few-mode optical fiber are as follows:

| Support Mode | $LP_{01}$/$LP_{02}$/$LP_{11}$/$LP_{21}$/$LP_{31}$/OAM Order 1 /OAM Order 2/OAM Order 0 |
| --- | --- |
| $LP_{01}$ Attenuation Coefficient (dB/km) | 0.188 |
| $LP_{02}$ Attenuation Coefficient (dB/km) | 0.24 |
| $LP_{11}$ Attenuation Coefficient (dB/km) | 0.192 |
| $LP_{21}$ Attenuation Coefficient (dB/km) | 0.21 |
| $LP_{31}$ Attenuation Coefficient (dB/km) | 0.23 |

Specifically, the predetermined distance from the first fiber core 1 and the second fiber core 2 to the center of the fiber body is 32~248 μm, and on the basis of ensuring that each fiber core is arranged at intervals, the distance from the first fiber core 1 and the second fiber core 2 to the center of the fiber body can be set at any position within the range of the predetermined distance of 32~248 μm. Compared with the fiber core with strict requirements on the position relationship, the structure is simpler and the manufacturing is more convenient.

Further, the first fiber core 1 and the second fiber core 2 each comprises a plurality of circulating layers arranged in order, and the fourth core layer 14 is arranged outside the outermost circulating layer. After setting a plurality of circulating layers, the stable transmission mode can be increased through a plurality of superposition with regularity.

Further, the number of the first fiber core 1 is three at most. When applied to a sensor, the excessive fiber cores will affect the transmission performance, therefore, the number of fiber cores should not be excessive, and the total number should preferably not exceed seven at most. The number of the first fiber core 1 herein is three at most. In one optical fiber, the possible number combinations of the first fiber core 1 and the second fiber core 2 are normally 1+2, 1+3, 2+5, 3+4, etc.

The present invention further provides a method for manufacturing a multi-core few-mode optical fiber. The technical solution adopted is that the deposition raw materials comprising silicon tetrachloride $SiCl_4$, germanium tetrachloride $GeCl_4$, phosphorus oxychloride $BCl_3$, hexafluoroethane $C_2F_6$ and oxygen $O_2$ are adopted to respectively deposit four core layers from the outside to the inside in a quartz reaction tube. Then, during the deposition process, the relative refractive index differences and the radius ratios between the core layers are adjusted through respectively adjusting the flow ratios of $SiCl_4$, $GeCl_4$, $BCl_3$, $C_2F_6$ and $O_2$ in the deposition materials and the number of depositions of each layer. Since the quartz reaction tube is a hollow reaction tube before deposited, and after the deposition of four core layers, there still exists a hollow area in the center of the deposited quartz reaction tube, so the tube needs to be melted. Therefore, after the deposition is completed, the deposited quartz reaction tube is melted into a solid core rod at a temperature above 2000 °C. Then, according to the requirements of the design, different flow ratios of deposition materials and the number of depositions are set to prepare a plurality of solid core rods corresponding to the first fiber core and the second fiber core. After preparing a plurality of the solid core rods, the quartz tube is melted into a solid rod, then holes are drilled at different predetermined positions of the solid rod. A plurality of prepared solid core rods is put into the holes of the solid rod for performing melting after the solid core rods are grinded and processed, and the outer layer of the deposited quartz reaction tube is made to be fused with the inner layer of the solid rod made of the quartz tube, so that a multi-core few-mode optical fiber preform corresponding to the first fiber core or the second fiber core is formed. Finally, the multi-core few-mode optical fiber preform is performed drawing to form a multi-core few-mode optical fiber that meets the requirements.

Specifically, the predetermined positions respectively correspond to the positions of the first fiber core 1 and the second fiber core 2 which are at a predetermined distance from the center of the fiber body, and the distance between the predetermined position and the center of the fiber body is within range of the predetermined distance.

Further, the plasma chemical vapor deposition method is used to deposit each core layer. Specifically, the four core layers comprise a first core layer 11, a second core layer 12, a third core layer 13, and a fourth core layer 14 arranged from the inside to the outside. During the process of depositing the fourth core layer 14, the flow ratio of $SiCl_4$ is controlled to 50%~85%, $GeCl_4$ to 10%~20%, $BCl_3$ to 10%~30%, $C_2F_6$ to 0%~10%, $O_2$ to 30%~70%, and the number of depositions to 600~4800. During the process of depositing the third core layer 13, the flow ratio of $SiCl_4$ is controlled to 30%~70%, $GeCl_4$ to 0%~20%, $C_2F_6$ to 10%~40%, $O_2$ to 30%~70%, and the number of depositions to 200~1200. During the process of depositing the second core layer 12, the flow ratio of $SiCl_4$ is controlled to 30%~70%, $GeCl_4$ to 20%~75%, $C_2F_6$ to 0%~25%, $O_2$ to 30%~70%, and the number of depositions to 300~1200. During the process of depositing the first core layer 11, the flow ratio of $SiCl_4$ is controlled to 50%~85%, $GeCl_4$ to 10%~20%, $BCl_3$ to 10%~30%, $C_2F_6$ to 0%~10%, $O_2$ to 30%~70%, and the number of depositions to 200~6000.

The present invention will be further described below in detail in combination with the embodiments.

Embodiment 1

The method for manufacturing a multi-core few-mode optical fiber for sensing provided in the present embodiment is specifically as follows.

During the process of depositing the fourth core layer 14, the flow ratio of $SiCl_4$ is controlled to 52%, $GeCl_4$ to 20%, $BCl_3$ to 10%, $C_2F_6$ to 0%, $O_2$ to 55%, and the number of depositions to 650. During the process of depositing the third core layer 13, the flow ratio of $SiCl_4$ is controlled to 35%, $GeCl_4$ to 20%, $C_2F_6$ to 10%, $O_2$ to 60%, and the number of depositions to 200. During the process of depositing the second core layer 12, the flow ratio of $SiCl_4$ is controlled to 35%, $GeCl_4$ to 75%, $C_2F_6$ to 0%, $O_2$ to 50%, and the number of depositions to 320. During the process of depositing the first core layer 11, the flow ratio of $SiCl_4$ is controlled to 50%, $GeCl_4$ to 18%, $BCl_3$ to 10%, $C_2F_6$ to 0%, $O_2$ to 70%, and the number of depositions to 300.

The structure parameters of the multi-core few-mode optical fiber corresponding to this method are as follows. The distance between the first fiber core 1 and the center of the fiber body is 35 $\mu$m, the distance between the second fiber core 2 and the center of the fiber body is 35 $\mu$m, the distance between the first fiber core 1 and the second fiber core 2 and between every two second fiber cores 2 is 49.5 $\mu$m. Among them, the maximum value $\Delta$%max of the relative refractive index difference between the first core layer 11 and the third core layer 13 is 1.8%; and the minimum value $\Delta$%min of the relative refractive index difference between the first core layer 11 and the third core layer 13 is 0.35%. The distribution power exponent $\alpha$ of the first core layer 11 is -1.87. The relative refractive index difference $\Delta$% between the third core layer 13 and the fourth core layer 14 is 0.11%. In addition, the radius $D_1$ of the first core layer 11 is 2.2 $\mu$m, the radius $D_2$ of the second core layer 12 is 3.2 $\mu$m, the radius $D_3$ of the third core layer 13 is 3.6 $\mu$m, and the radius $D_4$ of the fourth core layer 14 is 4.8 $\mu$m. Correspondingly, the diameter of the cladding layer 3 of the multi-core few-mode optical fiber is 125 $\mu$m, and the diameter of the coating layer 4 is 245 $\mu$m. Among them, the main performance and corresponding performance parameters of the multi-core few-mode optical fiber corresponding to this embodiment are shown in Table 1.

Table 1 Main Performance and Corresponding Performance Parameters of Multi-Core Few-Mode Optical Fiber in Embodiment 1

| Product Name | | | Four-Core Optical Fiber |
|---|---|---|---|
| Main Functions / Performance Parameters | **Optical Performance** | | **Indicator** |
| | Number of Fiber Cores (pcs) | | 4 |
| | Three First Fiber Core Attenuation @ 1550nm (dB/km) | | 0.19 |
| | | | 0.20 |
| | | | 0.21 |
| | One Second Fiber Core Attenuation @ 1550nm (dB/km) | | 0.24 |
| | Zero Dispersion Wavelength (nm) | | 1290 |
| | **Mechanical Performance** | | **Indicator** |
| | Minimum Bending Radius (mm) | | 8.5 |
| | Screening Strength (kpsi) | | 50 |
| **Performance of Coating Layer** | | | |
| Coating Material | | | Acrylic Resin |
| Service Temperature (°C) | | | -40~+70 |

Embodiment 2

The method for manufacturing a multi-core few-mode optical fiber for sensing provided in the present embodiment is specifically as follows.

During the process of depositing the fourth core layer 14, the flow ratio of $SiCl_4$ is controlled to 65%, $GeCl_4$ to 11%, $BCl_3$ to 28%, $C_2F_6$ to 10%, $O_2$ to 50%, and the number of depositions to 620. During the process of depositing the third core layer 13, the flow ratio of $SiCl_4$ is controlled to 35%, $GeCl_4$ to 0%, $C_2F_6$ to 40%, $O_2$ to 60%, and the number of depositions to 300. During the process of depositing the second core layer 12, the flow ratio of $SiCl_4$ is controlled to 30%, $GeCl_4$ to 25%,

$C_2F_6$ to 20%, $O_2$ to 60%, and the number of depositions to 380. During the process of depositing the first core layer 11, the flow ratio of $SiCl_4$ is controlled to 60%, $GeCl_4$ to 15%, $BCl_3$ to 25%, $C_2F_6$ to 10%, $O_2$ to 65%, and the number of depositions to 320.

The structure parameters of the multi-core few-mode optical fiber corresponding to this method are as follows. The distance between the first fiber core 1 and the center of the fiber body is 45 $\mu$m, the distance between the second fiber core 2 and the center of the fiber body is 45 $\mu$m, the distance between the first fiber core 1 and the second fiber core 2 and between every two second fiber cores 2 is 77.9 $\mu$m. Among them, the maximum value $\Delta$%max of the relative refractive index difference between the first core layer 11 and the third core layer 13 is 0.70%; and the minimum value $\Delta$%min of the relative refractive index difference between the first core layer 11 and the third core layer 13 is 0.15%. The distribution power exponent $\alpha$ of the first core layer 11 is -1.85. The relative refractive index difference $\Delta$% between the third core layer 13 and the fourth core layer 14 is 0.04%. In addition, the radius $D_1$ of the first core layer 11 is 2.3 $\mu$m, the radius $D_2$ of the second core layer 12 is 3.3 $\mu$m, the radius $D_3$ of the third core layer 13 is 4.0 $\mu$m, and the radius $D_4$ of the fourth core layer 14 is 5.1 $\mu$m. Correspondingly, the diameter of the cladding layer 3 of the multi-core few-mode optical fiber is 125 $\mu$m, and the diameter of the coating layer 4 is 245 $\mu$m. Among them, the main performance and corresponding performance parameters of the multi-core few-mode optical fiber corresponding to this embodiment are shown in Table 2.

Table 2 Main Performance and Corresponding Performance Parameters of Multi-Core Few-Mode Optical Fiber in Embodiment 2

| Product Name | | Three-Core Optical Fiber |
|---|---|---|
| | **Optical Performance** | **Indicator** |
| | Number of Fiber Cores (pcs) | 3 |
| Main Functions / Performance Parameters | Two First Fiber Core Attenuation @ 1550nm (dB/km) | 0.22 |
| | | 0.2 |
| | One Second Fiber Core Attenuation @ 1550nm (dB/km) | 0.25 |
| | Zero Dispersion Wavelength (nm) | 1305 |
| | **Mechanical Performance** | **Indicator** |
| | Minimum Bending Radius (mm) | 7.5 |
| | Screening Strength (kpsi) | 50 |
| **Performance of Coating Layer** | | |
| Coating Material | | Acrylic Resin |
| Service Temperature (°C) | | -40~+70 |

Embodiment 3

The method for manufacturing a multi-core few-mode optical fiber for sensing provided in the present embodiment is specifically as follows.

During the process of depositing the fourth core layer 14, the flow ratio of $SiCl_4$ is controlled to 60%, $GeCl_4$ to 20%, $BCl_3$ to 10%, $C_2F_6$ to 1%, $O_2$ to 60%, and the number of depositions to 4000. During the process of depositing the third core layer 13, the flow ratio of $SiCl_4$ is controlled to 50%, $GeCl_4$ to 15%, $C_2F_6$ to 10%, $O_2$ to 65%, and the number of depositions to 1100. During the process of depositing the second core layer 12, the flow ratio of $SiCl_4$ is controlled to 35%, $GeCl_4$ to 65%, $C_2F_6$ to 2%, $O_2$ to 50%, and the number of depositions to 900. During the process of depositing the first core layer 11, the flow ratio of $SiCl_4$ is controlled to 60%, $GeCl_4$ to 20%, $BCl_3$ to 10%, $C_2F_6$ to 2%, $O_2$ to 45%, and the number of depositions to 5700.

The structure parameters of the multi-core few-mode optical fiber corresponding to this method are as follows. The distance between the first fiber core 1 and the center of the fiber body is 40 $\mu$m, the distance between the second fiber core 2 and the center of the fiber body is 40 $\mu$m, the distance between the first fiber core 1 and the second fiber core 2 and between every two second fiber cores 2 is 69.2 $\mu$m. Among them, the maximum value $\Delta$%max of the relative refractive index difference between the first core layer 11 and the third core layer 13 is 1.56%; and the minimum value $\Delta$%min of the relative refractive index difference between the first core layer 11 and the third core layer 13 is 0.30%. The distribution power exponent $\alpha$ of the first core layer 11 is -1.92. The relative refractive index difference $\Delta$% between the third core layer 13 and the fourth core layer 14 is 0.10%. In addition, the radius $D_1$ of the first core layer 11 is 9.5 $\mu$m, the radius $D_2$ of the second core layer 12 is 10.2 $\mu$m, the radius $D_3$ of the third core layer 13 is 11.7 $\mu$m, and the radius $D_4$ of the fourth core layer 14 is 13.7 $\mu$m. Correspondingly, the diameter of the cladding layer 3 of the multi-core few-mode optical fiber is 250 $\mu$m, and the diameter of the coating layer 4 is 400 $\mu$m. Among them, the main performance and corresponding performance parameters of the multi-core few-mode optical fiber corresponding to this embodiment are shown in Table 3.

Table 3 Main Performance and Corresponding Performance Parameters of Multi-Core Few-Mode Optical Fiber in Embodiment 3

| Product Name | | Three-Core Optical Fiber |
|---|---|---|
| Optical Performance | | Indicator |
| | Number of Fiber Cores (pcs) | 3 |
| | Two First Fiber Core Attenuation @ 1550nm (dB/km) | 0.20 |
| Main Functions / Performan ce Parameters | | 0.18 |
| | One Second Fiber Core Attenuation @ 1550nm (dB/km) | 0.23 |
| | Zero Dispersion Wavelength (nm) | 1298 |
| Mechanical Performance | | Indicator |
| | Minimum Bending Radius (mm) | 7.5 |
| | Screening Strength (kpsi) | 50 |
| Performance of Coating Layer | | |
| Coating Material | | Acrylic Resin |
| Service Temperature (°C) | | -40~+70 |

Embodiment 4

The method for manufacturing a multi-core few-mode optical fiber for sensing provided in the present embodiment is specifically as follows.

During the process of depositing the fourth core layer 14, the flow ratio of $SiCl_4$ is controlled to 85%, $GeCl_4$ to 12%, $BCl_3$ to 25%, $C_2F_6$ to 7%, $O_2$ to 60%, and the number of depositions to 4700. During the process of depositing the third core layer 13, the flow ratio of $SiCl_4$ is controlled to 60%, $GeCl_4$ to 10%, $C_2F_6$ to 37%, $O_2$ to 50%, and the number of depositions to 1150. During the process of depositing the second core layer 12, the flow ratio of $SiCl_4$ is controlled to 65%, $GeCl_4$ to 25%, $C_2F_6$ to 20%, $O_2$ to 65%, and the number of depositions to 1100. During the process of depositing the first core layer 11, the flow ratio of $SiCl_4$ is controlled to 80%, $GeCl_4$ to 12%, $BCl_3$ to 25%, $C_2F_6$ to 10%, $O_2$ to 65%, and the number of depositions to 5500.

The structure parameters of the multi-core few-mode optical fiber corresponding to this method are as follows. The distance between the first fiber core 1 and the center of the fiber body is 45 $\mu$m, the distance between the second fiber core 2 and the center of the fiber body is 45 $\mu$m, the distance between the first fiber core 1 and the second fiber core 2 and between every two second fiber cores 2 is 77.94 $\mu$m. Among them, the maximum value $\Delta\%max$ of the relative refractive index difference between the first core layer 11 and the third core layer 13 is 0.32%; and the minimum value $\Delta\%min$ of the relative refractive index difference between the first core layer 11 and the third core layer 13 is 0.13%. The distribution power exponent $\alpha$ of the first core layer 11 is -1.91. The relative refractive index difference $\Delta\%$ between the third core layer 13 and the fourth core layer 14 is 0.03%. In addition, the radius $D_1$ of the first core layer 11 is 9.4 $\mu$m, the radius $D_2$ of the second core layer 12 is 11.1 $\mu$m, the radius $D_3$ of the third core layer 13 is 14.1 $\mu$m, and the radius $D_4$ of the fourth core layer 14 is 28.2 $\mu$m. Correspondingly, the diameter of the cladding layer 3 of the multi-core few-mode optical fiber is 250 $\mu$m, and the diameter of the coating layer 4 is 400 $\mu$m. Among them, the main performance and corresponding performance parameters of the multi-core few-mode optical fiber corresponding to this embodiment are shown in Table 4.

Table 4 Main Performance and Corresponding Performance Parameters of Multi-Core Few-Mode Optical Fiber in Embodiment 4

| Product Name | | Three-Core Optical Fiber |
|---|---|---|
| Main Functions / Performan ce Parameters | **Optical Performance** | **Indicator** |
| | Number of Fiber Cores (pcs) | 3 |
| | Two First Fiber Core Attenuation @ 1550nm (dB/km) | 0.22 |
| | | 0.23 |
| | One Second Fiber Core Attenuation @ 1550nm (dB/km) | 0.26 |
| | Zero Dispersion Wavelength (nm) | 1302 |
| | **Mechanical Performance** | **Indicator** |
| | Minimum Bending Radius (mm) | 7.5 |
| | Screening Strength (kpsi) | 50 |
| **Performance of Coating Layer** | | |
| Coating Material | | Acrylic Resin |
| Service Temperature (°C) | | -40~+70 |

Embodiment 5

The method for manufacturing a multi-core few-mode optical fiber for sensing provided in the present embodiment is specifically as follows.

During the process of depositing the fourth core layer 14, the flow ratio of $SiCl_4$ is controlled to 55%, $GeCl_4$ to 20%, $BCl_3$ to 10%, $C_2F_6$ to 2%, $O_2$ to 50%, and the number of depositions to 800. During the process of depositing the third core layer 13, the flow ratio of $SiCl_4$ is controlled to 65%, $GeCl_4$ to 10%, $C_2F_6$ to 15%, $O_2$ to 55%, and the number of depositions to 300. During the process of depositing the second core layer 12, the flow ratio of $SiCl_4$ is controlled to 60%, $GeCl_4$ to 25%, $C_2F_6$ to 22%, $O_2$ to 70%, and the number of depositions to 900. During the process of depositing the first core layer 11, the flow ratio of $SiCl_4$ is controlled to 80%, $GeCl_4$ to 15%, $BCl_3$ to 20%, $C_2F_6$ to 10%, $O_2$ to 55%, and the number of depositions to 1500.

The structure parameters of the multi-core few-mode optical fiber corresponding to this method are as follows. The distance between the first fiber core 1 and the center of the fiber body is 32 $\mu$m, the distance between the second fiber core 2 and the center of the fiber body is 32 $\mu$m, the distance between the first fiber core 1 and the second fiber core 2 and between every two second fiber cores 2 is 45.3 $\mu$m. Among them, the maximum value $\Delta\%max$ of the relative refractive index difference between the first core layer 11 and the third core layer 13 is 0.35%; and the minimum value $\Delta\%min$ of the relative refractive index difference between the first core layer 11 and the third core layer 13 is 0.32%. The distribution power exponent $\alpha$ of the first core layer 11 is -1.92. The relative refractive index difference $\Delta\%$ between the third core layer 13 and the fourth core layer 14 is 0.11%. In addition, the radius $D_1$ of the first core layer 11 is 4.9 $\mu$m, the radius $D_2$ of the second core layer 12 is 6.2 $\mu$m, the radius $D_3$ of the third core layer 13 is 6.6 $\mu$m, and the radius $D_4$ of the fourth core layer 14 is 7.5 $\mu$m. Correspondingly, the diameter of the cladding layer 3 of the multi-core few-mode optical fiber is 125 $\mu$m, and the diameter of the coating layer 4 is 245 $\mu$m. Among them, the main performance and corresponding performance parameters of the multi-core few-mode optical fiber corresponding to this embodiment are shown in Table 5.

Table 5 Main Performance and Corresponding Performance Parameters of Multi-Core Few-Mode Optical Fiber in Embodiment 5

| Product Name | | Four-Core Optical Fiber |
|---|---|---|
| Main Functions / Performan ce Parameters | Optical Performance | Indicator |
| | Number of Fiber Cores (pcs) | 4 |
| | Three First Fiber Core Attenuation @ 1550nm (dB/km) | 0.20 |
| | | 0.19 |
| | | 0.21 |
| | One Second Fiber Core Attenuation @ 1550nm (dB/km) | 0.24 |
| | Zero Dispersion Wavelength (nm) | 1302 |
| | Mechanical Performance | Indicator |
| | Minimum Bending Radius (mm) | 8.5 |
| | Screening Strength (kpsi) | 50 |
| Performance of Coating Layer | | |
| Coating Material | | Acrylic Resin |
| Service Temperature (°C) | | -40~+70 |

Embodiment 6

The method for manufacturing a multi-core few-mode optical fiber for sensing provided in the present embodiment is specifically as follows.

During the process of depositing the fourth core layer 14, the flow ratio of $SiCl_4$ is controlled to 80%, $GeCl_4$ to 12%, $BCl_3$ to 25%, $C_2F_6$ to 10%, $O_2$ to 70%, and the number of depositions to 4200. During the process of depositing the third core layer 13, the flow ratio of $SiCl_4$ is controlled to 35%, $GeCl_4$ to 20%, $C_2F_6$ to 35%, $O_2$ to 65%, and the number of depositions to 600. During the process of depositing the second core layer 12, the flow ratio of $SiCl_4$ is controlled to 35%, $GeCl_4$ to 55%, $C_2F_6$ to 2%, $O_2$ to 50%, and the number of depositions to 850. During the process of depositing the first core layer 11, the flow ratio of $SiCl_4$ is controlled to 75%, $GeCl_4$ to 15%, $BCl_3$ to 20%, $C_2F_6$ to 5%, $O_2$ to 55%, and the number of depositions to 4500.

The structure parameters of the multi-core few-mode optical fiber corresponding to this method are as follows. The distance between the first fiber core 1 and the center of the fiber body is 60 $\mu$m, the distance between the second fiber core 2 and the center of the fiber body is 60 $\mu$m, the distance between the first fiber core 1 and the second fiber core 2 and between every two second fiber cores 2 is 103.92 $\mu$m. Among them, the maximum value $\Delta$%max of the relative refractive index difference between the first core layer 11 and the third core layer 13 is 1.32%; and the minimum value $\Delta$%min of the relative refractive index difference between the first core layer 11 and the third core layer 13 is 0.14%. The distribution power exponent $\alpha$ of the first core layer 11 is -1.92. The relative refractive index difference $\Delta$% between the third core layer 13 and the fourth core layer 14 is 0.04%. In addition, the radius $D_1$ of the first core layer 11 is 8.5 $\mu$m, the radius $D_2$ of the second core layer 12 is 9.2 $\mu$m, the radius $D_3$ of the third core layer 13 is 9.7 $\mu$m, and the radius $D_4$ of the fourth core layer 14 is 12.7 $\mu$m. Correspondingly, the diameter of the cladding layer 3 of the multi-core few-mode optical fiber is 250 $\mu$m, and the diameter of the coating layer 4 is 350 $\mu$m. Among them, the main performance and corresponding performance parameters of the multi-core few-mode optical fiber corresponding to this embodiment are shown in Table 6.

Table 6 Main Performance and Corresponding Performance Parameters of Multi-Core Few-Mode Optical Fiber in Embodiment 6

| Product Name | | Three-Core Optical Fiber |
|---|---|---|
| Main Functions / Performan ce Parameters | Optical Performance | Indicator |
| | Number of Fiber Cores (pcs) | 3 |
| | Two First Fiber Core Attenuation @ 1550nm (dB/km) | 0.21 |
| | | 0.22 |
| | One Second Fiber Core Attenuation @ 1550nm (dB/km) | 0.27 |
| | Zero Dispersion Wavelength (nm) | 1307 |
| | Mechanical Performance | Indicator |
| | Minimum Bending Radius (mm) | 8.0 |
| | Screening Strength (kpsi) | 50 |
| Performance of Coating Layer | | |
| Coating Material | | Acrylic Resin |
| Service Temperature (°C) | | -40~+70 |

Embodiment 7

The method for manufacturing a multi-core few-mode optical fiber for sensing provided in the present embodiment is specifically as follows.

During the process of depositing the fourth core layer 14, the flow ratio of $SiCl_4$ is controlled to 50%, $GeCl_4$ to 10%, $BCl_3$ to 30%, $C_2F_6$ to 7%, $O_2$ to 70%, and the number of depositions to 620. During the process of depositing the third core layer 13, the flow ratio of $SiCl_4$ is controlled to 55%, $GeCl_4$ to 5%, $C_2F_6$ to 25%, $O_2$ to 60%, and the number of depositions to 300. During the process of depositing the second core layer 12, the flow ratio of $SiCl_4$ is controlled to 35%, $GeCl_4$ to 75%, $C_2F_6$ to 2%, $O_2$ to 50%, and the number of depositions to 350. During the process of depositing the first core layer 11, the flow ratio of $SiCl_4$ is controlled to 55%, $GeCl_4$ to 15%, $BCl_3$ to 10%, $C_2F_6$ to 4%, $O_2$ to 50%, and the number of depositions to 270.

The structure parameters of the multi-core few-mode optical fiber corresponding to this method are as follows. The distance between the first fiber core 1 and the center of the fiber body is 20 $\mu$m, the distance between the second fiber core 2 and the center of the fiber body is 20 $\mu$m, the distance between the first fiber core 1 and the second fiber core 2 and between every two second fiber cores 2 is 34.64 $\mu$m. Among them, the maximum value $\Delta$%max of the relative refractive index difference between the first core layer 11 and the third core layer 13 is 2.5%; and the minimum value $\Delta$%min of the relative refractive index difference between the first core layer 11 and the third core layer 13 is 0.18%. The distribution power exponent $\alpha$ of the first core layer 11 is -1.91. The relative refractive index difference $\Delta$% between the third core layer 13 and the fourth core layer 14 is 0.05%. In addition, the radius $D_1$ of the first core layer 11 is 2.1 $\mu$m, the radius $D_2$ of the second core layer 12 is 3.1 $\mu$m, the radius $D_3$ of the third core layer 13 is 3.8 $\mu$m, and the radius $D_4$ of the fourth core layer 14 is 5.0 $\mu$m. Correspondingly, the diameter of the cladding layer 3 of the multi-core few-mode optical fiber is 80 $\mu$m, and the diameter of the coating layer 4 is 165 $\mu$m. Among them, the main performance and corresponding performance parameters of the multi-core few-mode optical fiber corresponding to this embodiment are shown in Table 7.

Table 7 Main Performance and Corresponding Performance Parameters of Multi-Core Few-Mode Optical Fiber in Embodiment 7

| Product Name | | Three-Core Optical Fiber |
|---|---|---|
| Main Functions / Performance Parameters | **Optical Performance** | **Indicator** |
| | Number of Fiber Cores (pcs) | 3 |
| | Two First Fiber Core Attenuation @ 1550nm (dB/km) | 0.24 |
| | | 0.24 |
| | One Second Fiber Core Attenuation @ 1550nm (dB/km) | 0.23 |
| | Zero Dispersion Wavelength (nm) | 1306 |
| | **Mechanical Performance** | **Indicator** |
| | Minimum Bending Radius (mm) | 5.5 |
| | Screening Strength (kpsi) | 50 |
| **Performance of Coating Layer** | | |
| Coating Material | | Acrylic Resin |
| Service Temperature (°C) | | -40~+70 |

Embodiment 8

The method for manufacturing a multi-core few-mode optical fiber for sensing provided in the present embodiment is specifically as follows.

During the process of depositing the fourth core layer 14, the flow ratio of $SiCl_4$ is controlled to 75%, $GeCl_4$ to 18%, $BCl_3$ to 10%, $C_2F_6$ to 1%, $O_2$ to 55%, and the number of depositions to 4800. During the process of depositing the third core layer 13, the flow ratio of $SiCl_4$ is controlled to 65%, $GeCl_4$ to 8%, $C_2F_6$ to 10%, $O_2$ to 50%, and the number of depositions to 1200. During the process of depositing the second core layer 12, the flow ratio of $SiCl_4$ is controlled to 65%, $GeCl_4$ to 50%, $C_2F_6$ to 25%, $O_2$ to 65%, and the number of depositions to 1100. During the process of depositing the first core layer 11, the flow ratio of $SiCl_4$ is controlled to 85%, $GeCl_4$ to 12%, $BCl_3$ to 30%, $C_2F_6$ to 10%, $O_2$ to 70%, and the number of depositions to 5900.

The structure parameters of the multi-core few-mode optical fiber corresponding to this method are as follows. The distance between the first fiber core 1 and the center of the fiber body is 175 $\mu$m, the distance between the second fiber core 2 (the third fiber core 3 and the fourth fiber core 4) and the center of the fiber body is 175 $\mu$m, the distance between the first fiber core 1 and the second fiber core 2 and between every two second fiber cores 2 is 247.49 $\mu$m. Among them, the maximum value $\Delta$%max of the relative refractive index difference between the first core layer 11 and the third core layer 13 is 0.65%; and the minimum value $\Delta$%min of the relative refractive index difference between the first core layer 11 and the third core layer 13 is 0.22%. The distribution power exponent $\alpha$ of the first core layer 11 is -1.89. The relative refractive index difference $\Delta$% between the third core layer 13 and the fourth core layer 14 is 0.06%. In addition, the radius $D_1$ of the first core layer 11 is 9.69 $\mu$m, the radius $D_2$ of the second core layer 12 is 10.56 $\mu$m, the radius $D_3$ of the third core layer 13 is 11.42 $\mu$m, and the radius $D_4$ of the fourth core layer 14 is 14.38 $\mu$m. Correspondingly, the diameter of the cladding layer 3 of the multi-core few-mode optical fiber is 850 $\mu$m, and the diameter of the coating layer 4 is 1000 $\mu$m. Among them, the main performance and corresponding performance parameters of the multi-core few-mode optical fiber corresponding to this embodiment are shown in Table 8.

Table 8 Main Performance and Corresponding Performance Parameters of Multi-Core Few-Mode Optical Fiber in Embodiment 8

| Product Name | | Four-Core Optical Fiber |
|---|---|---|
| Main Functions / Performance | **Optical Performance** | **Indicator** |
| | Number of Fiber Cores (pcs) | 4 |
| | Two First Fiber Core Attenuation @ 1550nm (dB/km) | 0.27 |
| | | 0.25 |

(continued)

| Product Name | | Four-Core Optical Fiber |
|---|---|---|
| Parameters | | 0.27 |
| | One Second Fiber Core Attenuation @ 1550nm (dB/km) | 0.24 |
| | Zero Dispersion Wavelength (nm) | 1302 |
| **Mechanical Performance** | | **Indicator** |
| Minimum Bending Radius (mm) | | 11.0 |
| Screening Strength (kpsi) | | 50 |
| **Performance of Coating Layer** | | |
| Coating Material | | Acrylic Resin |
| Service Temperature (°C) | | -40~+70 |

Embodiment 9

The method for manufacturing a multi-core few-mode optical fiber for sensing provided in the present embodiment is specifically as follows.

During the process of depositing the fourth core layer 14, the flow ratio of $SiCl_4$ is controlled to 72%, $GeCl_4$ to 15%, $BCl_3$ to 18%, $C_2F_6$ to 5%, $O_2$ to 70%, and the number of depositions to 2000. During the process of depositing the third core layer 13, the flow ratio of $SiCl_4$ is controlled to 65%, $GeCl_4$ to 16%, $C_2F_6$ to 22%, $O_2$ to 40%, and the number of depositions to 800. During the process of depositing the second core layer 12, the flow ratio of $SiCl_4$ is controlled to 60%, $GeCl_4$ to 70%, $C_2F_6$ to 20%, $O_2$ to 60%, and the number of depositions to 900. During the process of depositing the first core layer 11, the flow ratio of $SiCl_4$ is controlled to 80%, $GeCl_4$ to 15%, $BCl_3$ to 20%, $C_2F_6$ to 10%, $O_2$ to 50%, and the number of depositions to 3500.

The structure parameters of the multi-core few-mode optical fiber corresponding to this method are as follows. The distance between the first fiber core 1 and the center of the fiber body is 62 μm, the distance between the second fiber core 2 and the center of the fiber body is 62 μm, the distance between the first fiber core 1 and the second fiber core 2 and between every two second fiber cores 2 is 100.32 μm. Among them, the maximum value Δ%max of the relative refractive index difference between the first core layer 11 and the third core layer 13 is 0.98%; and the minimum value Δ%min of the relative refractive index difference between the first core layer 11 and the third core layer 13 is 0.19%. The distribution power exponent α of the first core layer 11 is -1.90. The relative refractive index difference Δ% between the third core layer 13 and the fourth core layer 14 is 0.05%. In addition, the radius $D_1$ of the first core layer 11 is 7.4 μm, the radius $D_2$ of the second core layer 12 is 8.3 μm, the radius $D_3$ of the third core layer 13 is 9.1 μm, and the radius $D_4$ of the fourth core layer 14 is 10.7 μm. Correspondingly, the diameter of the cladding layer 3 of the multi-core few-mode optical fiber is 250 μm, and the diameter of the coating layer 4 is 350 μm. Among them, the main performance and corresponding performance parameters of the multi-core few-mode optical fiber corresponding to this embodiment are shown in Table 9.

Table 9 Main Performance and Corresponding Performance Parameters of Multi-Core Few-Mode Optical Fiber in Embodiment 9

| Product Name | | | Five-core optical fiber |
|---|---|---|---|
| | **Optical Performance** | | **Indicator** |
| | Number of Fiber Cores (pcs) | | 5 |
| | Two First Fiber Core Attenuation @ 1550nm (dB/km) | | 0.22 |
| Main Functions / Performance Parameters | | | 0.21 |
| | | | 0.22 |
| | | | 0.23 |
| | One Second Fiber Core Attenuation @ 1550nm (dB/km) | | 0.25 |
| | Zero Dispersion Wavelength (nm) | | 1302 |
| | **Mechanical Performance** | | **Indicator** |
| | Minimum Bending Radius (mm) | | 6.5 |
| | Screening Strength (kpsi) | | 50 |
| **Performance of Coating Layer** | | | |
| Coating Material | | | Acrylic Resin |
| Service Temperature (°C) | | | -40~+70 |

The present invention is not limited to the above-mentioned embodiments, it is defined by the claims.

**Claims**

1.   A multi-core few-mode optical fiber, comprising:

a fiber body, which comprises at least one first fiber core (1) and at least two second fiber cores (2) which are at a predetermined distance away from the center of the fiber body and spaced with each other, the first fiber core (1) and the second fiber cores (2) each comprises at least one circulating layer, the circulating layer comprises three core layers, and a core layer is further arranged outside the circulating layer; refractive indexes or diameters of any two adjacent core layers of the first fiber core (1) and the second fiber cores (2) are different, wherein at least one of the effective refractive index and the diameter of the first fiber core (1) is different from that of the second fiber cores (2);
a cladding layer (3), which surrounds the first fiber core (1) and the second fiber cores (2); the refractive index of the cladding layer (3) is lower than the effective refractive index of the first fiber core (1) and the second fiber cores (2), and is higher than that of the outermost core layer of the first fiber core (1) and the second fiber cores (2);
wherein the circulating layer comprises a first core layer (11), a second core layer (12) and a third core layer (13) arranged in order from the inside to the outside, and the core layer located outside the circulating layer is a fourth core layer (14), wherein the maximum relative refractive index difference between the first core layer (11) and the third core layer (13) is 0.3% - 2.5%, the minimum relative refractive index difference is 0.05% - 0.6%, and the relative refractive index difference between the third core layer (13) and the fourth core layer (14) is greater than 0% and less than or equal to 1.1%;
wherein the distribution power exponent $\alpha$ of the refractive index of the first core layer (11) is -1.2 - -2.5;
wherein the multi-core few-mode fiber can support five linear polarization modes of $LP_{01}$, $LP_{02}$, $LP_{11}$, $LP_{21}$, and $LP_{31}$.

2.   The multi-core few-mode optical fiber according to claim 1, wherein the refractive index of the third core layer (13) is greater than or equal to that of the cladding layer (3), and the refractive indexes of the fourth core layer (14), the cladding layer (3) and the third core layer (13) are approximately step distributions.

3.   The multi-core few-mode optical fiber according to claim 1, wherein the first fiber core (1) and the second fiber cores (2) each comprise a plurality of circulating layers arranged in order, and the fourth core layer (14) is arranged outside the outermost circulating layer.

4.  The multi-core few-mode optical fiber according to claim 1, wherein the predetermined distance is 32-248 $\mu$m.

5.  The multi-core few-mode optical fiber according to claim 1, wherein the number of the first fiber core (1) is three at most.

6.  The multi-core few-mode optical fiber according to claim 1, wherein the fiber body further comprises a coating layer (4), and the coating layer (4) is arranged outside the cladding layer (3).

7.  The multi-core few-mode optical fiber according to claim 6, wherein a thickness of the coating layer (4) is 20-100 $\mu$m, and a radius of the cladding layer (3) is 30~500 $\mu$m.

8.  The multi-core few-mode optical fiber according to claim 7, wherein the material of the coating layer (4) is one of double-layer acrylic resin, polyimide, single-layer acrylic resin or silicone rubber.

9.  A method for manufacturing a multi-core few-mode optical fiber according to claim 1, comprising the following steps:

    respectively depositing four core layers from the outside to the inside through using deposition materials comprising silicon tetrachloride ($SiCl_4$), germanium tetrachloride ($GeCl_4$), phosphorus oxychloride ($BCl_3$), hexafluoroethane ($C_2F_6$) and oxygen ($O_2$) in a quartz reaction tube, and during the process of deposition, adjusting relative refractive index differences and radius ratios between the core layers through respectively adjusting flow ratios of the deposition materials and the number of depositions;
    melting the deposited quartz reaction tube into a solid core rod at a temperature above 2000 °C;
    setting different flow ratios of deposition materials and the number of depositions to prepare a plurality of solid core rods corresponding to the first fiber core (1) and the second fiber cores (2);
    making the quartz tube into a solid rod, drilling holes at different predetermined positions of the solid rod, and after grinding and processing a plurality of the solid core rods, putting the solid core rods into the holes of the solid rod for performing melting so as to form a few-mode optical fiber preform with a multi-core structure corresponding to the first fiber core (1) or the second fiber cores (2); and
    performing drawing on the few-mode optical fiber preform with a multi-core structure to form a few-mode optical fiber with a multi-core structure.

10. The method according to claim 9, wherein the four core layers comprise a first core layer (11), a second core layer (12), a third core layer (13) and a fourth core layer (14) arranged from the inside to the outside, wherein

    during the process of depositing the fourth core layer (14), controlling the flow ratio of $SiCl_4$ to 50%-85%, $GeCl_4$ to 10%-20%, $BCl_3$ to 10%-30%, $C_2F_6$ to 0%~10%, $O_2$ to 30%~70%, and the number of depositions to 600~4800;
    during the process of depositing the third core layer (13), controlling the flow ratio of $SiCl_4$ to 30%~70%, $GeCl_4$ to 0%-20%, $C_2F_6$ to 10%-40%, $O_2$ to 30%-70%, and the number of depositions to 200-1200;
    during the process of depositing the second core layer (12), controlling the flow ratio of $SiCl_4$ to 30%~70%, $GeCl_4$ to 20%-75%, $C_2F_6$ to 0%-25%, $O_2$ to 30%-70%, and the number of depositions to 300-1200;
    during the process of depositing the first core layer (11), controlling the flow ratio of $SiCl_4$ to 50%-85%, $GeCl_4$ to 10%-20%, $BCl_3$ to 10%-30%, $C_2F_6$ to 0%-10%, $O_2$ to 30%-70%, and the number of depositions to 200-6000.

11. The method according to claim 9, wherein the predetermined positions respectively correspond to the positions of the first fiber core (1) and the second fiber cores (2) which are at a predetermined distance from the center of the fiber body.

12. The method according to claim 9, wherein the core layer is deposited by means of a plasma chemical vapor deposition method.

**Patentansprüche**

1.  Optische Faser mit mehreren Kernen und wenigen Modi, aufweisend:

    einen Faserkörper, der zumindest einen ersten Faserkern (1) und zumindest zwei zweite Faserkerne (2), die sich in einer vorgegebenen Entfernung von der Mitte des Faserkörpers entfernt befinden und voneinander beabstandet sind, aufweist, wobei der erste Faserkern (1) und die zweiten Faserkerne (2) jeweils eine Umlaufschicht aufweisen, wobei die Umlaufschicht drei Kernschichten aufweist, und wobei eine Kernschicht ferner außerhalb der Umlaufschicht angeordnet ist; wobei Brechindizes oder Durchmesser von zwei beliebigen benachbarten Kernschichten des ersten Faserkerns (1) und der zweiten Faserkerne (2) unterschiedlich sind, wobei zumindest eines von dem effektiven Brechindex und dem Durchmesser des ersten Faserkerns (1) sich von demjenigen der zweiten Faserkerne (2) unterscheidet;

eine Verkleidungsschicht (3), die den ersten Faserkern (1) und den zweiten Faserkern (2) umgibt; wobei der Brechindex der Verkleidungsschicht (3) niedriger ist als der effektive Brechindex des ersten Faserkerns (1) und der zweiten Faserkerne (2), und höher ist als derjenige der äußersten Kernschicht des ersten Faserkerns (1) und der zweiten Faserkerne (2);

wobei die Umlaufschicht eine erste Kernschicht (11), eine zweite Kernschicht (12) und eine dritte Kernschicht (13) aufweist, die in einer Reihenfolge von innen nach außen angeordnet sind, und wobei die sich außerhalb der Umlaufschicht befindliche Kernschicht eine vierte Kernschicht (14) ist, wobei die maximale relative Brechindexdifferenz zwischen der ersten Kernschicht (11) und der dritten Kernschicht (13) 0,3 % bis 2,5 % beträgt, die minimale relative Brechindexdifferenz 0,05 % bis 0,6 % beträgt, und die relative Brechindexdifferenz zwischen der dritten Kernschicht (13) und der vierten Kernschicht (14) mehr als 0 % und gleich oder weniger als 1,1 % beträgt;

wobei der Verteilungsleistungsexponent $\alpha$ des Brechindex der ersten Kernschicht (11) - 1,2 bis -2,5 beträgt;

wobei die optische Faser mit mehreren Kernen und wenigen Modi fünf lineare Polarisationsmodi von $LP_{01}$, $LO_{02}$, $LP_{11}$, $LP_{21}$, und $LP_{31}$ unterstützen kann.

2. Optische Faser mit mehreren Kernen und wenigen Modi nach Anspruch 1, wobei der Brechindex der dritten Kernschicht (13) gleich oder größer als derjenige der Verkleidungsschicht (3) ist, und die Brechindizes der vierten Kernschicht (14), der Verkleidungsschicht (3) und der dritten Kernschicht (13) ungefähre schrittweise Verteilungen sind.

3. Optische Faser mit mehreren Kernen und wenigen Modi nach Anspruch 1, wobei der erste Faserkern (1) und die zweiten Faserkerne (2) jeweils eine Mehrzahl an Umlaufschichten aufweisen, die in einer Reihenfolge angeordnet sind, und wobei die vierte Kernschicht (14) außerhalb der äußersten Umlaufschicht angeordnet ist.

4. Optische Faser mit mehreren Kernen und wenigen Modi nach Anspruch 1, wobei die vorgegebene Entfernung 32 bis 248 $\mu$m beträgt.

5. Optische Faser mit mehreren Kernen und wenigen Modi nach Anspruch 1, wobei die Anzahl des ersten Faserkerns (1) höchstens drei beträgt.

6. Optische Faser mit mehreren Kernen und wenigen Modi nach Anspruch 1, wobei der Faserkörper ferner eine Beschichtungsschicht (4) aufweist, und wobei die Beschichtungsschicht (4) außerhalb der Verkleidungsschicht (3) angeordnet ist.

7. Optische Faser mit mehreren Kernen und wenigen Modi nach Anspruch 6, wobei eine Dicke der Beschichtungsschicht (4) 20 bis 100 $\mu$m beträgt und ein Radius der Verkleidungsschicht (3) 30 ~ 500 $\mu$m beträgt.

8. Optische Faser mit mehreren Kernen und wenigen Modi nach Anspruch 7, wobei das Material der Beschichtungsschicht (4) eines von doppelschichtigem Acrylharz, Polyimid, einschichtigem Acrylharz oder Silikonkautschuk ist.

9. Verfahren zum Herstellen einer optischen Faser mit mehreren Kernen und wenigen Modi nach Anspruch 1, aufweisend die folgenden Schritte:

jeweiliges Abscheiden von vier Kernschichten von außen nach innen durch die Verwendung von Abscheidungsmaterialien, aufweisend Siliziumtetrachlorid ($SiCl_4$), Germaniumtetrachlorid ($GeCl_4$), Phosphoroxychlorid ($BCl_3$), Hexafluoroethan ($C_2F_6$) und Sauerstoff ($O_2$) in einem Quarz-Reaktionsrohr, und während des Vorgangs der Abscheidung, Einstellen von relativen Brechindexdifferenzen und Radiusverhältnissen zwischen den Kernschichten durch jeweiliges Einstellen von Strömungsverhältnissen der Abscheidungsmaterialien und der Anzahl von Abscheidungen;

Schmelzen des abgeschiedenen Quarz-Reaktionsrohrs in eine feste Kernstange bei einer Temperatur über 2000 °C;

Einstellen von unterschiedlichen Strömungsverhältnissen der Abscheidungsmaterialien und der Anzahl von Abscheidungen, um eine Mehrzahl an festen Kernstangen herzustellen, die dem ersten Faserkern (1) und den zweiten Faserkernen (2) entsprechen;

Formen des Quarzrohrs zu einer festen Stange, Bohren von Löchern an verschiedenen vorgegebenen Positionen der festen Stange, und nach dem Schleifen und Verarbeiten einer Mehrzahl der festen Kernstangen, Einführen der festen Kernstangen in die Löcher der festen Stange, um ein Schmelzen durchzuführen, so dass eine Vorform einer optischen Faser mit wenigen Modi und mit einer Mehrkernstruktur, die dem ersten Faserkern (1) oder den zweiten Faserkernen (2) entspricht, gebildet wird; und

Durchführen eines Ziehens bei der Vorform der optischen Faser mit wenigen Modi mit einer Mehrkernstruktur, um eine optische Faser mit wenigen Modi und einer Mehrkernstruktur zu bilden.

10. Verfahren nach Anspruch 9, wobei die vier Kernschichten eine erste Kernschicht (11), eine zweite Kernschicht (12), eine dritte Kernschicht (13) und eine vierte Kernschicht (14) aufweisen, die von innen nach außen angeordnet sind, wobei

während des Vorgangs des Abscheidens der vierten Kernschicht (14), ein Steuern des Strömungsverhältnisses von $SiCl_4$ auf 50 % bis 85 %, $GeCl_4$ auf 10 % bis 20 %, $BCl_3$ auf 10 % bis 30 %, $C_2F_6$ auf 0 % ~ 10 %, und $O_2$ auf 30 % ~ 70 % erfolgt, und die Anzahl der Abscheidungen 600 ~ 4800 beträgt;

während des Vorgangs des Abscheidens der dritten Kernschicht (13), ein Steuern des Strömungsverhältnisses von $SiCl_4$ auf 30 % ~ 70 %, $GeCl_4$ auf 0 % bis 20 %, $C_2F_6$ auf 10 % bis 40 %, und $O_2$ auf 30 % bis 70 % erfolgt, und die Anzahl der Abscheidungen 200 bis 1200 beträgt;

während des Vorgangs des Abscheidens der zweiten Kernschicht (12), ein Steuern des Strömungsverhältnisses von $SiCl_4$ auf 30 % ~ 70 %, $GeCl_4$ auf 20 % bis 75 %, $C_2F_6$ auf 0 % bis 25 %, und $O_2$ auf 30 % bis 70 % erfolgt, und die Anzahl der Abscheidungen 300 bis 1200 beträgt;

während des Vorgangs des Abscheidens der ersten Kernschicht (11), ein Steuern des Strömungsverhältnisses von $SiCl_4$ auf 50 % bis 85 %, $GeCl_4$ auf 10 % bis 20 %, $BCl_3$ auf 10 % bis 30 %, $C_2F_6$ auf 0 % bis 10 %, und $O_2$ auf 30 % bis 70 % erfolgt, und die Anzahl der Abscheidungen 200 bis 6000 beträgt.

11. Verfahren nach Anspruch 9, wobei die vorgegebenen Positionen jeweils den Positionen des ersten Faserkerns (1) und der zweiten Faserkerne (2) entsprechen, die sich in einer vorgegebenen Entfernung von der Mitte des Faserkörpers befinden.

12. Verfahren nach Anspruch 9, wobei die Kernschicht durch ein Verfahren zur plasmagestützten chemischen Gasphasenabscheidung abgeschieden wird.

## Revendications

1. Fibre optique multicœur à modes multiples, comprenant :

un corps de fibre, qui comprend au moins un premier cœur de fibre (1) et au moins deux seconds cœurs de fibre (2) qui sont situés à une distance prédéterminée du centre du corps de fibre et espacés les uns des autres, le premier cœur de fibre (1) et les seconds cœurs de fibre (2) comprenant chacun au moins une couche circulante, la couche circulante comprenant trois couches centrales, et une couche centrale étant en outre disposée à l'extérieur de la couche circulante ; les indices de réfraction ou les diamètres de deux couches de cœur adjacentes quelconques du premier cœur de fibre (1) et des seconds cœurs de fibre (2) sont différents, dans laquelle au moins l'un parmi l'indice de réfraction effectif et le diamètre de le premier cœur de fibre (1) est différent de celui des seconds cœurs de fibre (2) ;

une couche de gaine (3) qui entoure le premier cœur de fibre (1) et les seconds cœurs de fibre (2) ; l'indice de réfraction de la couche de gaine (3) est inférieur à l'indice de réfraction effectif du premier cœur de fibre (1) et des seconds cœurs de fibre (2), et est supérieur à celui de la couche d'âme la plus externe du premier cœur de fibre (1) et des seconds cœurs de fibre (2) ;

dans laquelle la couche circulante comprend une première couche centrale (11), une deuxième couche centrale (12) et une troisième couche centrale (13) disposées dans l'ordre de l'intérieur vers l'extérieur, et la couche centrale située à l'extérieur de la couche circulante est une quatrième couche centrale (14), dans laquelle la différence maximale d'indice de réfraction relative entre la première couche centrale (11) et la troisième couche centrale (13) est de 0,3 % à 2,5 %, la différence relative minimale d'indice de réfraction est de 0,05 % à 0,6 %, et la différence relative d'indice de réfraction entre la troisième couche centrale (13) et la quatrième couche centrale (14) est supérieure à 0 % et inférieure ou égale à 1,1 % ;
dans laquelle l'exposant de puissance de distribution $\alpha$ de l'indice de réfraction de la première couche centrale (11) est de -1,2 à -2,5 ;
dans laquelle la fibre multicœur à modes multiples peut supporter cinq modes de polarisation linéaire $LP_{01}$, $LP_{02}$, $LP_{11}$, $LP_{21}$ et $LP_{31}$.

2. La fibre optique multicœur à modes multiples selon la revendication 1, dans laquelle l'indice de réfraction de la troisième couche centrale (13) est supérieur ou égal à celui de la couche de gaine (3), et les indices de réfraction de la quatrième couche centrale (14), de la couche de gaine (3) et de la troisième couche centrale (13) sont approximativement des distributions en gradins.

3. La fibre optique multicœur à modes multiples selon la revendication 1, dans laquelle le premier cœur de fibre (1) et les seconds cœurs de fibre (2) comprennent chacun une pluralité de couches circulantes disposées dans l'ordre, et la quatrième couche de cœur (14) est disposée à l'extérieur de la couche circulante la plus externe.

4. La fibre optique multicœur à modes multiples selon la revendication 1, dans laquelle la distance prédéterminée est de 32 à 248 $\mu$m.

5. La fibre optique multicœur à modes multiples selon la revendication 1, dans laquelle le nombre du premier cœur de fibre (1) est au plus trois.

6. La fibre optique multicœur à modes multiples selon la revendication 1, dans laquelle le corps de fibre comprend en outre une couche de revêtement (4), et la couche de revêtement (4) est disposée à l'extérieur de la couche de gaine (3).

7. La fibre optique multicœur à modes multiples selon la revendication 6, dans laquelle l'épaisseur de la couche de revêtement (4) est de 20 à 100 $\mu$m, et le rayon de la couche de gaine (3) est de 30 à 500 $\mu$m.

8. La fibre optique multicœur à modes multiples selon la revendication 7, dans laquelle le matériau de la couche de revêtement (4) est l'un des matériaux suivants : résine acrylique double couche, polyimide, résine acrylique monocouche ou caoutchouc silicone.

9. Procédé de fabrication d'une fibre optique multicœur à modes multiples selon la revendication 1, comprenant les étapes suivantes :

déposer respectivement quatre couches centrales de l'extérieur vers l'intérieur en utilisant des matériaux de dépôt comprenant du tétrachlorure de silicium ($SiCl_4$), du tétrachlorure de germanium ($GeCl_4$), de l'oxychlorure de phosphore ($BCl_3$), de l'hexafluoroéthane ($C_2F_6$) et de l'oxygène ($O_2$) dans un tube à réaction en quartz, et pendant le processus de dépôt, ajuster les différences d'indice de réfraction relatives et les rapports de rayon entre les couches centrales en ajustant respectivement les rapports de débit des matériaux de dépôt et le nombre de dépôts ;
faire fondre le tube de réaction en quartz déposé en une tige centrale solide à une température supérieure à 2000 °C ;
définir différents rapports de débit des matériaux de dépôt et le nombre de dépôts afin de préparer une pluralité de tiges centrales solides correspondant au premier cœur de fibre (1) et aux seconds cœurs de fibre (2) ;
transformer le tube de quartz en une tige solide, percer des trous à différentes positions prédéterminées de la tige solide, et après avoir meulé et traité une pluralité de tiges de cœur solides, placer les tiges de cœur solides dans les trous de la tige solide pour effectuer une fusion afin de former une préforme de fibre optique à modes multiples avec une structure multicœur correspondant au premier cœur de fibre (1) ou aux seconds cœurs de fibre (2) ; et
effectuer un étirage sur la préforme de fibre optique à modes multiples avec une structure multicœur pour former une fibre optique à modes multiples avec une structure multicœur.

10. Le procédé selon la revendication 9, dans lequel les quatre couches centrales comprennent une première couche centrale (11), une deuxième couche centrale (12), une troisième couche centrale (13) et une quatrième couche centrale (14) disposées de l'intérieur vers l'extérieur, dans lequel

pendant le processus de dépôt de la quatrième couche centrale (14), le rapport de flux de $SiCl_4$ est contrôlé à 50 %-85 %, $GeCl_4$ à 10 %-20 %, $BCl_3$ à 10 %-30 %, $C_2F_6$ à 0 %-10 %, $O_2$ à 30 %-70 %, et le nombre de dépôts à 600-4800 ;

pendant le processus de dépôt de la troisième couche centrale (13), contrôler le rapport de flux de $SiCl_4$ à 30 % ~70 %, de $GeCl_4$ à 0 %-20 %, de $C_2F_6$ à 10 %-40 %, de $O_2$ à 30 %-70 %, et le nombre de dépôts à 200-1200 ;

pendant le processus de dépôt de la deuxième couche centrale (12), contrôler le rapport de flux de $SiCl_4$ à 30 % ~70 %, de $GeCl_4$ à 20 %-75 %, de $C_2F_6$ à 0 %-25 %, de $O_2$ à 30 %-70 %, et le nombre de dépôts à 300-1200 ;

pendant le processus de dépôt de la première couche centrale (11), contrôler le rapport de flux de $SiCl_4$ à 50 %-85 %, de $GeCl_4$ à 10 %-20 %, de $BCl_3$ à 10 %-30 %, $C_2F_6$ à 0 %-10 %, $O_2$ à 30 %-70 %, et le nombre de dépôts à 200-6000.

11. Le procédé selon la revendication 9, dans lequel les positions prédéterminées correspondent respectivement aux positions du premier cœur de fibre (1) et des seconds cœurs de fibre (2) qui sont à une distance prédéterminée du centre du corps de fibre.

12. Le procédé selon la revendication 9, dans lequel la couche centrale est déposée au moyen d'un procédé de dépôt chimique en phase vapeur assisté par plasma.

Fig. 1

Fig. 2

Fig. 3

Fig. 4

**EP 3 982 175 B1**

**Patent documents cited in the description**

- US 20170160466 A1
- US 20190033513 A1
- US 20180356590 A1